# EUROPÄISCHE PATENTSCHRIFT

(11) **EP 2 128 212 B1**
(45) Veröffentlichungstag und Bekanntmachung des Hinweises auf die Patenterteilung: **13.01.2016**
(21) Anmeldenummer: 09159368.1
(22) Anmeldetag: 05.05.2009
(51) Int. Cl.: C09J 7/04

(54) **Klebeband mit textilem Träger für die Kabelbandagierung**
Adhesive tape with textile holder for cable bandaging
Bande adhésive dotée d'un support textile pour le bandage de câbles

(30) Priorität: 23.05.2008 DE 102008024814; 17.06.2008 DE 102008028427
(43) Veröffentlichungstag der Anmeldung: 02.12.2009
(73) Patentinhaber: tesa SE, 22848 Norderstedt (DE)
(72) Erfinder: Kopf, Patrik Dr., 56567 Neuwied (DE); Wahlers-Schmidlin, Andreas, 21720, Guderhandviertel (DE)

(56) Entgegenhaltungen:
- EP-A2- 1 817 972
- WO-A1-02/14446

## Beschreibung

Die Erfindung betrifft ein Klebeband vorzugsweise zum Umhüllen von langgestrecktem Gut wie insbesondere Leitungen oder Kabelsätze mit einem textilen Träger und mit einer zumindest auf einer Seite des Trägers aufgebrachten druckempfindlichen Klebebeschichtung. Des Weiteren betrifft die Erfindung die Verwendung des Klebebands sowie ein langgestrecktes Gut wie einen Kabelbaum, das mit dem erfindungsgemäßen Klebeband ummantelt ist.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Die Verwendung von Klebebändern mit einem Vlies als Träger zur Bandagierung von Kabelbäumen ist bekannt. So beschreiben die DE 94 01 037 U1 oder die EP 0 668 336 A1 ein Klebeband mit einem bandförmigen, textilen Träger, der aus einem Nähvlies oder Nähwirkvlies besteht, das seinerseits aus einer Vielzahl parallel zueinander laufender, eingenähter Nähte gebildet wird. Das beschriebene Klebeband zeigt bei seiner Verwendung zur Kabelbaumbandagierung aufgrund seiner speziellen Ausführung Geräuschdämpfungseigenschaften. Für diesen Typ Vlies sind Nähwirkmaschinen des Typs "Maliwatt" der Firma Karl Mayer, ehemals Malimo, bekannt und im Einsatz. Dabei wird ein Grundvlies aus quergelegten Stapelfasern hergestellt, das ohne weitere Vorverfestigung der Nähstelle zugeführt wird, in der die parallel zueinander laufenden Fäden eingenäht und damit die Fasern verfestigt werden. Dieses Nähwirkvlies ist dem Fachmann unter dem Begriff Maliwatt-Vlies bekannt. Klebebänder, die aus Maliwatt und einer Klebmassebeschichtung bestehen, sind seit Jahren im Einsatz, zum Beispiel von der Firma Coroplast GmbH & Co. KG, Wuppertal, unter der Produktnummer 8550 oder von der Firma tesa AG, Hamburg, unter der Produktnummer 51608.
Der Nachteil dieser Trägermaterialien besteht darin, dass die Fasern vor dem Übernähen keine Vorverfestigung erhalten. Sie sind nicht miteinander verschlungen. Das bedeutet, dass das aus den Fasern gebildete Flächengebilde, das Grundvlies, vor dem Übernähen keine Verfestigung aufweist. Erst durch das Übernähen mit den parallelen Fäden wird im Textil die Verfestigung dargestellt, das heißt das Einbinden der Fasern und die Zugfestigkeit, vor allem in Längsrichtung.
Das hat zur Folge, dass eine hohe Anzahl von Längsfäden pro Breite (Feinheit) und hohe Anzahl von Maschen pro Länge (geringe Stichlänge) notwendig sind, um eine ausreichende Einbindung der quergelegten Fasern zu erreichen. Meist werden in obigen Anwendungsbeispielen Fadenzahlen von 22 bis 28 Fäden/25 mm benötigt, die Stichlänge beträgt meist 1,0 bis 1,3 mm, das Fadengewicht beträgt standardmäßig 50 dtex. Geringere Feinheiten und/oder höhere Stichlängen führen zu unzureichender Fasereinbindung, dadurch werden beim Abrollen Fasern aus der Rückseite des Klebebandes gerissen, die damit die Klebkraft und mechanische Festigkeit des Klebebandes beeinträchtigen. Dies verschärft sich insbesondere an den Schnittkanten und damit bei Klebebandrollen geringer Breite wie 12 mm oder 9 mm. Die hohe Anzahl von Fäden pro Breite und/oder die geringe Stichlänge haben deshalb wirtschaftliche Nachteile, weil viel Fadenmaterial gebraucht wird und die mögliche Fertigungsgeschwindigkeit des Gesamtträgers durch die Stichlänge begrenzt wird.
Ein geringer Abstand der parallelen Fäden zueinander hat auch den Nachteil, dass insbesondere bei höheren Flächengewichten die Steifigkeit in Querrichtung zunimmt, was die Anschmiegsamkeit des Klebebandes bei der Wicklung verringert.
Um den Ausriss von Fasern aus dem Vlies zu verhindern, ist nicht nur eine hohe Fadendichte und/oder geringe Stichlänge notwendig, auch die Art der verwendeten Stapelfasern, aus dem das Grundvlies gebildet wird, ist daran angepasst. Es werden relativ lange und dicke Fasern verwendet (zum Beispiel mit einer mittleren Faserfeinheit von ca. 3,3 dtex und einer mittleren Länge von 80 mm), die dann durch die Fäden besser fixiert werden können als dünnere und/oder kürzere Fasern. Lange und dicke Fasern haben aber den Nachteil, dass daraus Grundvliese von minimal circa 50 bis 55 g/m² hergestellt werden können. Dies entspricht dann einem Flächengewicht des Maliwatt-Vlieses von circa 65 bis 70 g/m². Für noch geringere Flächengewichte ist eine ausreichende Gleichmäßigkeit der Faserverteilung über die Fläche nicht möglich, so dass Löcher und faserfreie Stellen entstehen, was eine Verwendung als Träger für Klebebänder unmöglich macht. Damit sind leichtere und kostengünstigere Träger für Klebebänder mit dieser Technologie nicht zugänglich.

Neben dem in den genannten Schriften erwähnten Nähwirkvlies gibt es weitere Träger, die in Klebebändern zur Kabelbaumbandagierung eingesetzt werden.

Der DE 44 42 093 C1 liegt die Verwendung eines Vlieses als Träger für ein Klebeband zugrunde, das durch die Bildung von Maschen aus den Fasern des Vlieses als ein verstärktes Querfaservlies entsteht, also ein dem Fachmann unter dem Namen Malivlies bekanntes Vlies.
Die oben beschriebenen Nachteile des Maliwatt-Vlieses kommen auch beim Malivlies zum Tragen. Mangelnde Fasereinbindung führt zu hohem Faserausriss oder muss bei der Verwendung des Vlieses für Klebebänder durch weitere Maßnahmen kompensiert werden. Hinzu kommt, dass wegen des fehlenden Nähfadens die Längsfestigkeit nicht hoch ist und insbesondere eine hohe Dehnung des Klebebandes auftritt, die zur Verjüngung und Verformung beim Abrollen und Anwenden des Klebebandes führt.

In der DE 100 39 982 A1 wird ein Klebeband auf Basis eines Vliesträgers beschrieben, das mit geringen Flächengewichten von 20 bis 80 g/m² Dämpfungswerte von 3 bis 10 dB(A) erzeugt. Der bevorzugte Vliesträger ist dabei ein Stapelfaservlies ohne weitere Nähfäden, ein Spinnvlies (Filamentvlies) ohne Nähfäden oder ein Meltblownvlies ohne Nähfäden.
Die Nachteile der Vliese ohne Nähfaden liegen darin, dass die für die Anwendung als Träger für Klebebänder günstigen Eigenschaften, die durch den Nähfaden erzeugt werden, fehlen. Dazu zählen neben der Fasereinbindung vor allem die mechanischen Eigenschaften in Längsrichtung. Für Klebebänder insbesondere bei der Anwendung der Ummantelung von langgestrecktem Gut, wie insbesondere Kabelsätze, sind hohe Reißfestigkeit und geringe Dehnung in Längsrichtung erforderlich. Dies kann durch einen im Vlies vermaschten Faden besonders gut dargestellt werden. In der DE 100 39 982 A1 wird zwar ein Nähwirkvlies erwähnt. Das ist aber wiederum vom Typ Maliwatt und hat die beschriebenen Nachteile der Maliwatt-Vliese.

Oben genannte Vliese ohne Nähfäden haben eine unzureichende Verfestigung für die Anwendung als Träger eines Klebebandes. Derartige Vliese haben hohe Dehnungen, und das Klebeband dehnt und verjüngt sich beim Abrollen. Außerdem werden Fasern aus der Vliesrückseite gezogen und zerstören damit die Klebrigkeit der Klebeseite. Außerdem sind diese Klebebänder oft nicht mit der Hand einzureißen, oder es ergibt sich keine gerade Abrisskante. Die Verarbeitbarkeit des Klebebandes bei der Kabelbandagierung ist deshalb stark eingeschränkt.

Oben genannte Vliese ohne Nähfaden können nachträglich oder innerhalb der Vliesfertigung mechanisch, thermisch oder mit chemischen Bindemitteln behandelt werden. Dann können hohe mechanische Festigkeit in Längsrichtung und geringe Dehnung des Vlieses und damit des daraus gefertigten Klebebandes und gute Fasereinbindung erreicht werden.

Dies wird in den folgenden Patentschriften beschrieben.
Aus der DE 195 23 494 C1 ist die Verwendung eines Klebebandes mit einem Träger aus einem Spinnvlies aus Polypropylen bekannt. Die Verfestigung der Endlosfasern des Spinnvlieses erfolgt thermisch mit Hilfe eines beheizten Prägekalanders. Dadurch werden die Fasern an der Oberfläche angeschmolzen, verkleben miteinander und verfestigen somit.

Mit der DE 298 04 431 U1 wird ebenfalls die Verwendung eines Klebebandes mit einem Träger aus einem thermisch verfestigten Spinnvlies offenbart, wobei das vorgeschlagene Spinnvlies aus Polyester besteht.

Aus der DE 199 23 399 A1 sind Stapelfaservliese als Träger für Klebebänder bekannt, bei denen als Zweitfaser eine geringe Menge an Schmelzfasern zugegeben werden. Diese können nach der eigentlichen Vliesherstellung durch Hitze aus Heißluft oder durch Heißkalandern aktiviert werden, schmelzen auf und verbinden damit die Hauptfasern miteinander.

Aus der DE 199 37 446 A1 sind Stapelfaservliese als Träger für Klebebänder bekannt, die durch Zugabe von chemischen Bindemitteln verfestigt werden.

Der Nachteil dieser so behandelten Vliese liegt darin, dass die Vliese sehr steif werden und ihren "textilen Charakter" verlieren. Das führt beim Klebeband dazu, dass dieses nicht ausreichend flexibel und anschmiegsam ist. Nach der Wicklung auf dem Kabelsatz hält das Klebebandende wegen seiner Steifigkeit nicht auf der Bandage, ein Rückstellverhalten (Flagging) tritt auf, das heißt, die Klebebandenden stehen ab.
Die Behandlung der Vliese durch oben genannte Maßnahmen findet in der Regel nicht nur in Längsrichtung, sondern mehr oder weniger gleichmäßig in alle Richtungen statt. Das hat zur Folge, dass sich das daraus hergestellte Klebeband nur noch schlecht oder nicht mehr quer abreißen lässt. Daneben vermindert sich in der Regel die geräuschdämpfende Eigenschaft der Vliese.
Das bedeutet dass es praktisch nicht möglich ist, die widerstrebenden Anforderungen an den Träger eines Klebebandes für die die Kabelbandagierung mit diesen Vliesen ohne Nähfaden abzudecken.

Die Prüfung und Klassifizierung von Klebebändern für die Kabelummantelung erfolgt in der Automobilindustrie umfangreichen Normenwerken, wie zum Beispiel der LV 312-1 "Schutzsysteme für Leitungssätze in Kraftfahrzeugen, Klebebänder; Prüfrichtlinie" (02/2008) als gemeinsame Norm der Firmen Daimler, Audi, BMW und Volkswagen.
Die Geräuschdämpfung eines Klebebandes wird anhand eines definierten Prüfaufbaus und Prüfverfahrens bestimmt. Die Klassifizierung der Klebebänder erfolgt dann wie nachstehend in Tabelle 1 wiedergegeben:

**Tabelle 1: Klassifizierung Geräuschdämpfung nach LV 312-1 (02/2008)**

| **Geräuschdämpfungsklasse** | **Anforderung** |
|---|---|
| A keine Geräuschdämpfung | 0 bis ≤ 2 dB(A) |
| B geringe Geräuschdämpfung | > 2 bis ≤ 5 dB(A) |
| C mittlere Geräuschdämpfung | > 5 bis ≤10 dB(A) |
| D hohe Geräuschdämpfung | > 10 bis ≤ 15 dB(A) |
| E sehr hohe Geräuschdämpfung | > 15 dB(A) |

Die Abriebbeständigkeit eines Klebebandes wird nach LV312-1 ebenfalls anhand eines definierten Prüfverfahrens bestimmt. Die Klassifizierung der Klebebänder hinsichtlich ihrer Abriebbeständigkeit bei einem Dorndurchmesser von 5 mm ist in Tabelle 2 wiedergegeben:

**Tabelle 2: Klassifizierung Abriebbeständigkeit nach LV 312-1 (02/2008)**

| **Abriebklasse** | **Anforderung** |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | 5000 -14999 Hübe |
| F extrem hoher Abriebschutz | ≥ 15000 Hübe |

Aufgabe der Erfindung ist es, gegenüber dem Stand der Technik eine merkliche Verbesserung zu erzielen und ein Klebeband zur Verfügung zu stellen, welches ein geringes spezifisches Gewicht mit einer ausreichenden Geräuschdämpfung, ausreichendem Abriebschutz und einer optimalen Verarbeitbarkeit bei der Ummantelung von Kabeln kombiniert.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Klebebands sowie ein mit dem Klebeband ummantelter Kabelbaum vom Erfindungsgedanken umfasst.

Demgemäß betrifft die Erfindung ein Klebeband zum Ummanteln von langgestrecktem Gut wie insbesondere Kabelsätzen mit einem Träger auf Vliesbasis, der zumindest einseitig mit einer Klebebeschichtung versehen ist, wobei der Träger ein Flächengewicht von 30 bis 120 g/m² aufweist.

Der Träger besteht aus mindestens einer Lage eines vorverfestigten Vlieses, nämlich ein Spinnvlies, ein Meltblown-Vlies oder ein mechanisch durch Luft- und/oder Wasserstrahlen oder durch Vernadelung verfestigtes Stapelfaservlies, das mit einer Vielzahl von Fäden übernäht ist, die gemäß einer bevorzugten Ausführungsform in Maschinenrichtung parallel zueinander verlaufen.

Die Fadendichte ist kleiner ist als 22 Fäden pro 25 mm Breite des Trägers, vorzugsweise zwischen 9 und 20 Fäden pro 25 mm.

Das Grundvlies wird in einem ersten Schritt hergestellt und verfestigt und anschließend in einem zweiten Schritt mit den bevorzugt parallel zueinander verlaufenden Fäden übernäht.

Überraschend und für den Fachmann unerwartet ergibt gerade die Kombination aus den vorverfestigten Vliesen und der Übernähung mit parallel zueinander verlaufenden Fäden einen geeigneten Träger für die Herstellung eines Kabelwickelbands. Durch die separate Vorverfestigung und der anschließenden Übernähung der Grundvliese können die notwendigen Eigenschaften wie hohe Zugfestigkeit bei geringer Dehnung, gute Querreißbarkeit mit gerader Abrisskante, geringe Steifigkeit und gute Anschmiegsamkeit, gute Fasereinbindung und gute Geräuschdämpfung erreicht werden.

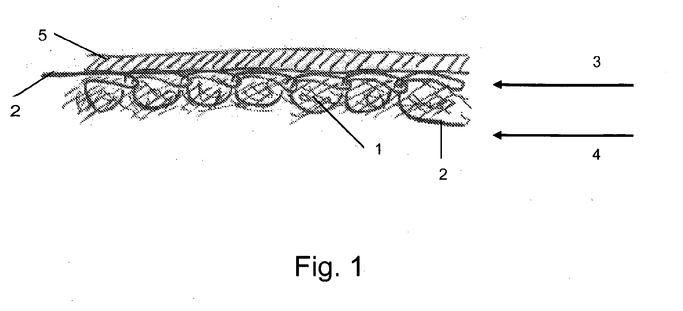

Die Figur 1 zeigt schematisch eine Seitenansicht eines solchen Klebebandes. Dabei ist (1) das vorverfestigte Vlies (Grundvlies) und (2) der Faden, mit dem das Grundvlies übernäht wurde, hier beispielhaft in der Bindungsart Franse (die unter anderem in dem Standardwerk "Vliesstoffe" von W. Albrecht, H. Fuchs, W. Kittelmann, WILEY-VCH Verlag GmbH, 2000, im Abschnitt 6.2.1.1 gezeigt wird). Durch die beim Übernähen gebildeten Maschen ergibt sich eine Maschenseite (3) und eine Stegseite (4) des Vlieses. Die Klebmasseschicht (5) kann, wie hier dargestellt auf der Maschenseite (3) oder alternativ auf der Stegseite (4) aufgebracht sein.

Durch die Vorverfestigung des Grundvlieses kann die Fadenzahl der Übernähfaden pro 25 mm unter den Wert von 22 Fäden/25 mm Breite des Trägers verringert werden, ohne dass beim Abrollen des Klebebandes Fasern aus der Rückseite gerissen werden. Vorzugsweise liegt die Fadenzahl zwischen 9 und 20 Fäden/25 mm Breite des Trägers. Ein weiterer besonders vorteilhafter Wert für die Fadenzahl ist 12 Fäden/25 mm Breite des Trägers oder 18 Fäden/25 mm Breite des Trägers

Ebenfalls durch die Vorverfestigung des Grundvlieses kann die Stichlänge der Übernähfaden über dem Wert von 1,5 mm liegen, vorzugsweise 1,5 bis 5 mm, weiter vorzugsweise 1,5 bis 2,5 mm.

Die erfindungsgemäß geringe Fadenzahl pro Breite und die erfindungsgemäß hohe Stichlänge wirken sich positiv auf die Flexibilität des Vliesträgers und damit auf die Flexibilität des Klebebandes aus. So erhält man ein Klebeband, welches sich wegen seiner Flexibilität in Längs- und Querrichtung und seiner Anschmiegsamkeit optimal für die Kabelumwicklung eignet.

Bei geeigneter Ausprägung des Grundvlieses können Geräuschdämpfungsklassen nach der Automobilnorm LV 312-1 von A bis D erreicht werden. Bei geeigneter Ausprägung des Grundvlieses und der Nähfäden können Abriebklassen nach der Automobilnorm LV 312-1 von A bis C erreicht werden.

Diese erstaunlichen Eigenschaftsverbesserung der Grundvliese durch das Übernähen beziehungsweise durch die Vorverfestigung erlaubt es, ein neuartiges Kabelwickelband herzustellen, welches bei geeigneter Ausprägung durch eine geringe Dicke beim Umwickeln von langgestrecktem Gut einen Vorteil im Platzbedarf bietet und eine Gewichtsersparnis bereitstellt. Auch können durch die Verwendung geringerer Flächengewichte und/oder die Verwendung von kostengünstigen Vlieslegungs- und Vliesvorverfestigungsverfahren kostengünstige Vliese als Klebebandträger erhalten werden, ohne auf die positiven Eigenschaften der bekannten Nähwirkvliese des Typs Maliwatt bei Verarbeitung des Klebebandes und Schutz des umwickelten Kabelsatzes zu verzichten.

Als Grundvlies können alle bekannten Vliese verwendet werden, wobei unter "Vlies" zumindest Flächengebilde gemäß DIN EN 29092 (August 1992) zu verstehen sind.

Als Vliesstoffe kommen Stapelfaservliese, jedoch auch Filamentvliese (Spinnvliese) sowie Meltblownvliese in Frage. Als Verfestigungsmethoden sind für die Vliese die mechanische, die thermische und die chemische Verfestigung bekannt.

Unter einem vorverfestigten Vlies versteht man erfindungsgemäß ein Vlies, dessen Höchstzugkraft in Längsrichtung, gemessen nach DIN EN 29073-3 (August 1992), über 2 N/cm oder 10 N/50 mm liegt.

Besonders vorteilhaft ist ein Stapelfaservlies, das im ersten Schritt durch Vernadelung vorverfestigt wird oder das durch Luft- oder Wasserstrahlen vorverfestigt wird. Ein derartiges Vlies ist **dadurch gekennzeichnet, dass** durch die Bildung von Maschen aus Fasern des Vlieses oder durch Nadelung ein merklicher Anteil der Stapelfasern zumindest teilweise senkrecht orientiert wird. Dies hat den Vorteil, dass dadurch die Abriebfestigkeit des Vlieses und die Geräuschdämpfung des Vlieses verbessert werden. Dadurch können bei gleichen Flächengewichten eine bessere Abriebfestigkeit und Geräuschdämpfung des späteren Klebebandes erreicht werden als bei nicht vorverfestigten Vliesen. Durch das Übernähen mit parallel zueinander verlaufenden Fäden wird diese Eigenschaftsverbesserung dann auch für Klebebänder nutzbar.

Weiterhin besonders vorteilhaft ist die Verwendung eines Filamentvlieses (Spinnvlieses) als Grundvlies. Dabei werden aus einer Polymerschmelze durch eine Spinndüse mittels Heißluftstrom Endlosfilamente erzeugt, die auf einem Transportband abgelegt werden. Durch die Verwirbelung der Endlosfilamente bildet sich bei der Ablage ein Vlies aus. Zur Verfestigung wird das Vlies direkt im Anschluss noch durch einen beheizten Kalander thermisch verfestigt. Bei Verwendung einer Prägewalze entsteht eine Thermoprägung. Dabei braucht es nur eine geringe thermische Behandlung, um die Vorverfestigung sicherzustellen. Dadurch kann die Steifigkeit des Vlieses gering gehalten werden. Denn das spätere Übernähen erzeugt die notwendige Längsfestigkeit und trägt zur Fasereinbindung bei.

Die Verfestigung nach Ablage der Endlosfilamente kann alternativ oder zusätzlich zur thermischen Behandlung auch durch Luft- oder Wasserstrahlen erfolgen. Bei Verfestigung ausschließlich durch Wasserstrahlen kann sehr viel besser ein "textiler Charakter" des Vlieses erzeugt werden als durch eine Kalandrierung, da durch die Wasserstrahlen kein starkes Anschmelzen der Fasern, sondern ein Vermaschen derselbigen, insbesondere auch eine zumindest teilweise senkrechte Ausrichtung der Filamentfasern erreicht werden kann. Das entstandene Textil wird als wasserstrahlverfestigtes Spinnvlies bezeichnet.

Weiterhin besonders vorteilhaft ist die Verwendung eines Meltblownvlieses als Grundvlies. Dabei werden aus einer Polymerlösungen, unterstützt durch (warme) Luftströme Fasern auf ein Sieb "gesprüht". Dadurch können sehr feine Fasern erzeugt werden, die bei geeigneter Polymerauswahl und Prozessführung den entstehenden Vliesen einen "textilen Charakter" geben können.

Die Fäden werden anschließend in einem Nähprozess/Nähwirkprozess durch Ausbildung von Fadenmaschen in das Vlies eingebracht, das Vlies wird dadurch übernäht. Dies kann beispielsweise mit den Kettenwirkmaschinen oder Nähwirkmaschinen der Firmen Karl Mayer Textilmaschinen GmbH, Obertshausen, oder LIBA Maschinenfabrik GmbH, Naila, durchgeführt werden. Es entstehen Fadenreihen, die in Fransenbindung oder Trikotbindung eingebracht werden können. Bevorzugt wird die Fransenbindung angewandt. Der Abstand der parallelen Fadenreihen zueinander wird zum Beispiel angegeben in Anzahl der Fäden pro 25 mm Vliesbreite, beispielsweise 14 /25 mm und dann als Feinheit F14 bezeichnet. Es wird auch ein bestimmter Abstand der Einstichpunkte, die so genannte Stichlänge, beispielsweise 2,0 mm, eingestellt.

Weiterhin können auch mehrere Lagen von gleichartigen oder verschiedenartigen Vliesen beim Übernähen in einem Arbeitsgang miteinander verbunden werden. Dadurch lassen sich Vorteile und Eigenschaften der verschiedenen Vliese kombinieren.

Weiterhin kann durch anschließendes Kalandern des Vliesträgers eine Verdichtung des Vlieses erfolgen, was sich positiv auf die Gleichmäßigkeit des Vlieses und den benötigten Klebmasseauftrag auswirken kann. Unter Kalandern versteht man das Verpressen des Vlieses zwischen zwei Walzen unter Druck und eventuell erhöhter Temperatur.

Bevorzugt besteht das Vlies aus Polyester-, Polypropylen-, Polyethylen- oder Polyamidfasern (Stapelfasern oder Endlosfasern). Auch Cellulosefasern, insbesondere Viskosefasern können zumindest anteilig enthalten sein.

Weiter bevorzugt besteht der (Näh-)faden aus Polyester, Polypropylen, Polyethylen oder Polyamid.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar.
Vorzugsweise ist die Klebemasse eine Haftklebemasse, also eine viskoelastische Masse, die bei Raumtemperatur in trockenem Zustand permanent klebrig und klebfähig bleibt. Die Klebung erfolgt durch leichten Anpressdruck sofort auf fast allen Substraten.

Das Auftragsgewicht bewegt sich gemäß einer bevorzugten Ausführungsform im Bereich zwischen 20 bis 100 g/m².

Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.

Eine Klebemasse, die sich ebenfalls als besonders geeignet zeigt, ist eine niedermolekulare Acrylatschmelzhaftklebemasse, wie sie unter der Bezeichnung acResin UV von der BASF geführt wird. Diese Klebemasse mit niedrigem K-Wert erhält ihre anwendungsgerechten Eigenschaften durch eine abschließende strahlenchemisch ausgelöste Vernetzung.

Ganz besonders bevorzugt besteht die Klebebeschichtung aus einer Klebmasse auf Basis Synthesekautschuk, nämlich insbesondere eine Klebemasse aus mindestens einem Vinylaromaten-Block-Copolymer und einem zumindest teilhydrierten Klebharz.

Bei dem Vinylaromaten-Block-Copolymer kann es sich um ein Styrolblockcopolymer, insbesondere um ein hydriertes Blockcopolymer handeln.

Als (Haft-)Klebemassen finden solche auf Basis von Blockcopolymeren enthaltenden Polymerblöcke, gebildet von Vinylaromaten (A-Blöcke) wie zum Beispiel Styrol und solchen gebildet durch Polymerisation von 1,3-Dienen (B-Blöcke) wie zum Beispiel Butadien und Isopren oder einem Copolymer aus beiden, Anwendung. Es können auch Mischungen unterschiedlicher Blockcopolymere zum Einsatz kommen. Bevorzugt werden Produkte eingesetzt, die zum Teil oder vollständig hydriert sind.

Die Blockcopolymere können lineare A-B-A-Struktur aufweisen. Einsetzbar sind ebenfalls Blockcopolymere von radialer Gestalt sowie sternförmige und lineare Multiblockcopolymere. Als weitere Komponente können A-B-Zweiblockcopolymere eingesetzt werden.

Anstelle der Polystyrolblöcke können auch Polymerblöcke auf Basis anderer aromatenhaltiger Homo- und Copolymere (bevorzugt C₈- bis C₁₂-Aromaten) mit Glasübergangstemperaturen von > 75 °C genutzt werden wie zum Beispiel α -methylstyrolhaltige Aromatenblöcke. Gleichfalls sind Polymerblöcke auf Basis von (Meth)acrylathomo- und (Meth)acrylatcopolymeren mit Glasübergangstemperaturen von > 75 °C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, zum Beispiel Polystyrolblöcke, als auch Poly(meth)acrylatblöcke nutzen.

Anstelle von Styrol-Butadien-Blockcopolymeren und Styrol-Isopren-Blockcopolymeren und/oder deren Hydrierungsprodukten, mithin Styrol-Ethylen/Butylen-Blockcopolymere und Styrol-Ethylen/Propylen-Blockcopolymere, können ebenfalls Blockcopolymere und deren Hydrierungsprodukte genutzt werden, welche weitere polydienhaltige Elastomerblöcke nutzen wie zum Beispiel Copolymere mehrerer unterschiedlicher 1,3-Diene. Erfindungsgemäß nutzbar sind des weiteren funktionalisierte Blockcopolymere wie zum Beispiel maleinsäureanhydridmodifizierte oder silanmodifizierte Styrolblockcopolymere.

Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Bevorzugt handelt es sich bei dem hydrierten Klebharz um ein hydriertes Kohlenwasserstoffharz.

Als Klebrigmacher dienen Klebharze, die mit dem Elastomerblock der Styrolblockcopolymere verträglich sind und zumindest zum Teil hydriert sind.
Geeignete Klebharze sind unter anderem vorzugsweise partiell oder vollständig hydrierte Harze auf Basis von Kolophonium oder Kolophoniumderivaten. Es können auch zumindest zum Teil hydrierte Kohlenwasserstoffharze, zum Beispiel hydrierte Kohlenwasserstoffharze erhalten durch teilweise oder vollständige Hydrierung von aromatenhaltigen Kohlenwasserstoffharzen (zum Beispiel Arkon P und Arkon M Serien der Firma Arakawa oder Regalite-Serie von Eastman), Kohlenwasserstoffharze auf Basis von hydrierten Dicyclopentadien-Polymeren (zum Beispiel Escorez 5300er-Serie von Exxon), Kohlenwasserstoffharze auf Basis von hydrierten C₅/C₉-Harzen (Escorez 5600er-Serie von Exxon) oder Kohlenwasserstoffharze auf Basis von hydrierten C₅-Harzen (Eastotac der Firma Eastman) beziehungsweise deren Gemische eingesetzt werden.
Auch hydrierte Polyterpenharze auf Basis von Polyterpenen sind verwendbar. Vorgenannte Klebharze können sowohl allein als auch im Gemisch eingesetzt werden.

Als weitere Additive können typischerweise Lichtschutzmittel wie zum Beispiel UV-Absorber, sterisch gehinderte Amine, Antiozonantien, Metalldesaktivatoren, Verarbeitungshilfsmittel, endblockverstärkende Harze eingesetzt werden.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Füllstoffe wie zum Beispiel Siliziumdioxid, Glas (gemahlen oder in Form von Kugeln), Aluminiumoxide, Zinkoxide, Calciumcarbonate, Titandioxide, Ruße, um nur einige zu nennen, ebenso Farbpigmente und Farbstoffe sowie optische Aufheller können ebenfalls Verwendung finden.

Üblicherweise werden styrolblockcopolymerbasierenden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte. Standardmäßig in Haftklebemassen auf Basis von Styrolblockcopolymeren eingesetzte primäre Antioxidantien sind sehr häufig sterisch gehinderte Phenole, welche eine 3-(p-Hydroxyphenyl)-propionsäure Gruppierung oder eine 3-(o-Hydroxyphenyl)-propionsäure Gruppe tragen wie zum Beispiel Irganox 1010, Irganox 1076, Irganox 259, Irganox 1035 und Irganox 1135 der Firma Ciba Additive, Sumilizer BP 101 und Sumilizer BP 76 der Firma Sumitomo oder Hostanox O 10 und Hostanox O 16 der Firma Clariant oder Lowinox PP 35 und Lowinox PO 35 der Firma Chemische Werke Lowi, um nur einige zu nennen.
Als besonders geeignet haben sich Ein- und/oder Mehrkernphenole, die in Ortho- und/oder Parastellung zur phenolischen OH-Gruppe eine Benzylthioethergruppierung enthalten, gezeigt. Bevorzugt geeignet sind 4,6-bis (Octylthiomethyl)-o-Cresol und 4,6-bis(Dodecylthiomethyl)-o-Cresol, Einkernphenole, wie sie zum Beispiel von der Firma Ciba unter dem Markennamen Irganox 1520 beziehungsweise Irganox 1726 angeboten werden.

Diese können idealerweise in Kombination mit sekundären Antioxidantien eingesetzt werden.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die Herstellung und Verarbeitung der Haftklebemassen kann aus Lösung, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren. Besonders bevorzugt ist die kontinuierliche Fertigung der Haftklebemasse mit Hilfe eines Extruders und anschließender Beschichtung direkt auf das zu beschichtende Substrat bei entsprechend hoher Temperatur der Klebmasse.

Die so hergestellten Klebemassen können dann mit den allgemein bekannten Verfahren auf den Träger gebracht werden. Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.
Möglich ist auch eine Transferierung der Klebemasse von einem anti-adhäsiven Trägertuch oder Releaseliner auf den Trägerverbund.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden.
Als Trennmaterial eignet sich bevorzugt ein nicht-fusselndes Material wie eine Kunststofffolie oder ein gut verleimtes, langfaseriges Papier.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.

Schließlich umfasst der Erfindungsgedanke auch ein langgestrecktes Gut, ummantelt mit einem erfindungsgemäßen Klebeband. Vorzugsweise handelt es sich bei dem langgestreckten Gut um einen Kabelsatz.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.
Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart.
Schließlich beschreiben die EP 1 315 781 A1 sowie die DE 103 29 994 A1 Ausführungsformen von Klebebändern, wie sie auch für das erfindungsgemäße Klebeband möglich sind.

In Tabelle 3 wird die Erfindung durch einige Beispiele näher erläutert, ohne die Erfindung damit einschränken zu wollen.

Die Messungen fanden dabei nach folgenden Normen statt:
- Flächengewichte der Vliese und der Beschichtung nach DIN EN ISO 2286-2
- Höchstzugkraft und Höchstzugkraftdehnung der Vliese in Längsrichtung nach DIN EN 29073-3 in einer Probenbreite von 50 mm, einer Einspannlänge von 100 mm und einer Zuggeschwindigkeit von 300 mm/min
- Höchstzugkraft und Höchstzugkraftdehnung der Klebebänder in Längsrichtung nach DIN EN 1940 und DIN EN 1941 am Maximum der Reißdehnungskurve (Einspannlänge 100 mm, Zuggeschwindigkeit 300 mm/min)
- Klebkraft nach DIN EN 1939
- Dicke der Vliese und Klebebänder nach DIN EN 1942
- Dicke der (Näh-)fäden nach DIN EN ISO 2060
- Flagging, Geräuschdämpfung, Abriebfestigkeit und Handeinreißbarkeit nach LV312-1.
- Die Biegesteifigkeit wurde gemessen mit einem Softometer KWS basic 2000mN der Firma Wolf Messtechnik, Freiberg, nach dem Universal-Softometerverfahren.
   Alle Werte sind repräsentative Mittelwerte.

**Tabelle 3: Beispiele und Gegenbeispiele für Träger und daraus hergestellte Klebebänder**

| | **Beispiel** | **A** | **B** | **1.)** | **2.)** | **3.)** |
|---|---|---|---|---|---|---|
| **Parameter** | **Einheit** | | | | | |
| **Grundvlies** | | | | | | |
| Material Faser | | PET | PET | PET | PP | PET |
| Flächengewicht | g/m² | 60 | 48 | 49 | 45 | 30 |
| Dicke | µm | 220 | 200 | 225 | 240 | 130 |
| Höchstzugkraft | N/cm | ca. 0,2 | 24 | 22 | 28 | 14 |
| Höchstzugkraftdehnung | % | | 35 | 61 | 111 | 22 |
| **Übernähtes Vlies** | | | | | | |
| Material Nähfaden | | PET | kein | PET | PET | PET |
| Dicke Nähfaden | dtex | 50 | | 50 | 50 | 33 |
| Anzahl der Nähfäden, Feinheit | 1/25mm | 22 | | 12 | 12 | 14 |
| Stichlänge | mm | 1,0 | | 2,0 | 2,0 | 2,5 |
| Flächengewicht | g/m² | 75 | | 56 | 53 | 35 |
| Höchstzugkraft | N/cm | 38 | | 26 | 28 | 26 |
| Höchstzugkraftdehnung | % | 18 | | 23 | 19 | 26 |
| Biegesteifigkeit längs | mN | 1-2 | 20-35 | 1-2 | 2-4 | 1-3 |
| Biegesteifigkeit quer | mN | 2-4 | 15-20 | 1-2 | 1-2 | 1-2 |
| **Klebeband** | | | | | | |
| Gesamtdicke | µm | 280 | 220 | 270 | 280 | 160 |
| Flächengewicht Klebmasse | g/m² | 70 | 35 | 50 | 50 | 40 |
| Art der Klebmasse | | K | Ac | K | Ac | K |
| Höchstzugkraft | N/cm | 38 | 26 | 32 | 28 | 26 |
| Höchstzugkraftdehnung | % | 18 | 30 | 24 | 19 | 24 |
| Klebkraft auf Stahl | N/cm | 3,0 | 2,8 | 3,6 | 2,6 | 3,6 |
| Flagging nach 24 h | mm | 0 | 15 | 0 | 0 | 0 |
| Handeinreißbar | | Ja | Bedingt | Ja | Ja | Ja |
| Geräuschdämpfung | dB (A) | 5,5 | 5,0 | 6,0 | 6,3 | 4,0 |
| Abriebklasse, 5 mm Stab | | A | A | A | A | A |

A und B sind Gegenbeispiele. A ist das Nähwirkvlies vom Typ Maliwatt nach der EP 0 668 336 A1. "Grundvlies" hier ist der unverfestigte Faserflor, das übernähte Vlies ist dann das dem Fachmann bekannte Maliwatt-Vlies. Das Klebeband ist das mit Klebmasse beschichtete und zu Bändern geschnittene Vlies.
B ist ein Stapelfaservlies mit quergelegten Fasern, von denen 20 Gew.-% Schmelzfasern sind. Das Vlies ist nicht übernäht und ist damit ein Vlies analog DE 199 23 399 A1.

Bei 1.) ist das Grundvlies ein quer-/kreuzgelegtes Stapelfaservlies, das wasserstrahlverfestigt wurde.
Bei 2.) ist das Grundvlies ein Filamentvlies (Spinnvlies), dessen Filamente lediglich durch Wasserstrahlen verfestigt wurden. Bei 3.) ist das Grundvlies ein Filamentvlies (Spinnvlies), dessen Filamente thermisch über eine Prägewalze verfestigt wurden.

Die Abkürzungen stehen PET für Polyester, PP für Polypropylen, K für Kautschukbasis, Ac für Acrylatbasis. Die Richtung der Nähfäden war bei allen Beispielen die Maschinenrichtung, die Bindungsart war Franse.

### Beispiel A zeigt ein Klebeband, das anforderungsgerecht für die Kabelumwicklung ist:

Hohe Zugfestigkeit, geringe Dehnung, wenig Faserausriss aus der Vliesrückseite (repräsentiert durch eine hohe Klebkraft auf Stahl), kein Flagging, handeinreißbar und ausreichende Geräuschdämpfung.

Vliese wie B (ohne Übernähung mit Faden, Verfestigung lediglich durch Wasserstrahlen und Schmelzfasern) erreichen zwar wegen der Schmelzfasern ausreichend hohe Zugfestigkeiten und mittlere Dehnungen, aber durch die starke Verfestigung resultiert eine hohe Biegesteifigkeit. Diese Biegesteifigkeit ist ein Maß für die mangelnde Flexibilität des Vlieses und seinen mangelnden "textilen Charakter". Daraus resultiert auch ein steifes Klebeband, das bei der Kabelumwicklung schlecht zu verarbeiten ist, hohes Flagging zeigt und nur bedingt handeinreißbar ist. Die Anforderungen an ein Klebeband zur Kabelumwicklung werden also nicht erfüllt.

Beispiel 1.) zeigt ein erfindungsgemäßes Klebeband, dessen Träger durch Übernähen eines vorverfestigten Vlieses entstand. Dieses Klebeband zeigt die anforderungsgerechten Merkmale für die Kabelumwicklung: Trotz geringerer Anzahl der Nähfäden und einer höheren Stichlänge tritt wenig Faserausriss aus der Vliesrückseite auf (sichtbar an der hohen Klebkraft auf Stahl nach Abrollen der Rolle), die mechanischen Daten sind anforderungsgerecht, kein Flagging, handeinreißbar und ausreichende Geräuschdämpfung. Die Flexibilität in Querrichtung, repräsentiert durch die Biegesteifigkeit quer ist geringer als bei A.

Bei den Beispielen 2.) und 3.) wurden Spinnvliese als Grundvlies verwendet, auch hier ergeben sich trotz geringer Anzahl der Nähfäden und/oder hoher Stichlänge anwendungsgerechte Eigenschaften und eine hohe Flexibilität des Klebebandes in alle Richtungen.

## Patentansprüche

1. Klebeband insbesondere zum Ummanteln von langgestrecktem Gut, wie insbesondere Kabelsätze, mit einem Träger auf Vliesbasis, der zumindest einseitig mit einer Klebebeschichtung versehen ist, wobei der Träger ein Flächengewicht von 30 bis 120 g/m² aufweist,
**dadurch gekennzeichnet, dass**
der Träger aus mindestens einer Lage eines vorverfestigten Vlieses, nämlich ein Spinnvlies, ein Meltblown-Vlies oder ein mechanisch durch Luft- und/oder Wasserstrahlen oder durch Vernadelung verfestigtes Stapelfaservlies, besteht, das mit einer Vielzahl von Fäden übernäht ist, wobei die Fadendichte kleiner ist als 22 Fäden pro 25 mm Breite des Trägers, vorzugsweise zwischen 9 und 20 Fäden pro 25 mm.

2. Klebeband nach Anspruch 1,
**dadurch gekennzeichnet, dass**
das Vlies aus Polyester-, Polypropylen-, Polyethylen- oder Polyamidfasern (Stapelfasern oder Endlosfasern) besteht.

3. Klebeband nach Anspruch 1 oder 2,
**dadurch gekennzeichnet, dass**
die Fäden aus Polyester, Polypropylen, Polyethylen oder Polyamid besteht.

4. Klebeband nach zumindest einem der Ansprüche 1 bis 3,
**dadurch gekennzeichnet, dass**
die Fäden parallel zueinander in Maschinenrichtung verlaufen.

5. Klebeband nach zumindest einem der vorherigen Ansprüche,
**dadurch gekennzeichnet, dass**
die Stichlänge mehr als 1,5 mm beträgt, vorzugsweise 1,5 bis 5 mm.

6. Klebeband nach zumindest einem der vorherigen Ansprüche,
**dadurch gekennzeichnet, dass**
das vorverfestigte Vlies eine Höchstzugkraft von mindestens 2 N/cm besitzt.

7. Klebeband nach zumindest einem der vorherigen Ansprüche,
**dadurch gekennzeichnet, dass**
der Träger aus mehreren Lagen gleichartiger oder verschiedenartiger Vliese besteht, die durch die parallel zueinander verlaufenden Fäden vernäht werden.

8. Klebeband nach zumindest einem der vorherigen Ansprüche,
**dadurch gekennzeichnet, dass**
das Vliesmaterial durch Kalandern verdichtet ist.

9. Klebeband nach zumindest einem der vorherigen Ansprüche,
**dadurch gekennzeichnet, dass**
es sich bei der Kleberbeschichtung um eine Klebmasse auf Basis Naturkautschuk, Synthesekautschuk, Acrylat oder Silikon handelt.

10. Klebeband nach zumindest einem der vorherigen Ansprüche,
**dadurch gekennzeichnet, dass**
es sich bei der Kleberbeschichtung um eine niedermolekulare Acrylatschmelzhaftklebemasse handelt.

11. Verwendung eines Klebebandes nach zumindest einem der vorherigen Ansprüche zum Ummanteln von langgestrecktem Gut, wobei das Klebeband in einer Schraubenlinie um das langgestreckte Gut geführt wird.

12. Verwendung eines Klebebandes nach zumindest einem der vorherigen Ansprüche zum Ummanteln von langgestrecktem Gut, wobei das langgestreckte Gut in axialer Richtung von dem Band umhüllt wird.

13. Langgestrecktes Gut, wie insbesondere ein Kabelsatz, ummantelt mit einem Klebeband nach zumindest einem der vorherigen Ansprüche.

## Claims

1. Adhesive tape intended more particularly for jacketing elongate material, such as cable looms more particularly, having a nonwoven-based carrier which is provided at least on one side with an adhesive coating, the carrier having a basis weight of 30 to 120 g/m²,
**characterized in that**
the carrier is composed of at least one ply of a preconsolidated nonwoven web, namely a spunbonded web, a meltblown web or a staple fibre web mechanically consolidated as a result of air jets and/or water jets or by needling, which is overstitched with a multiplicity of threads, the thread density being less than 22 threads per 25 mm width of the carrier, preferably between 9 and 20 threads per 25 mm.

2. Adhesive tape according to Claim 1, **characterized in that** the web is composed of polyester, polypropylene, polyethylene or polyamide fibres (staple fibres or continuous filament fibres).

3. Adhesive tape according to Claim 1 or 2, **characterized in that** the threads are composed of polyester, polypropylene, polyethylene or polyamide.

4. Adhesive tape according to at least one of Claims 1 to 3, **characterized in that** the threads extend parallel to one another in machine direction.

5. Adhesive tape according to at least one of the preceding claims, **characterized in that** the stitch length is more than 1.5 mm, preferably 1.5 to 5 mm.

6. Adhesive tape according to at least one of the preceding claims, **characterized in that** the preconsolidated web possesses an ultimate tensile strength of at least 2 N/cm.

7. Adhesive tape according to at least one of the preceding claims, **characterized in that** the carrier is composed of two or more plies of similar or different webs which are stitched together by the threads extending parallel to one another.

8. Adhesive tape according to at least one of the preceding claims, **characterized in that** the web material is compacted as a result of calendering.

9. Adhesive tape according to at least one of the preceding claims, **characterized in that** the coating of adhesive comprises an adhesive based on natural rubber, synthetic rubber, acrylate or silicone.

10. Adhesive tape according to at least one of the preceding claims, **characterized in that** the coating of adhesive comprises a low molecular mass, pressure-sensitive, acrylate hotmelt adhesive.

11. Use of an adhesive tape according to at least one of the preceding claims for jacketing elongate material, the adhesive tape being passed around the elongate material in a helical line.

12. Use of an adhesive tape according to at least one of the preceding claims for jacketing elongate material, the elongate material being wrapped in an axial direction by the tape.

13. Elongate material, such as more particularly a cable loom, jacketed with an adhesive tape according to at least one of the preceding claims.

## Revendications

1. Bande adhésive, notamment pour l'habillage d'un article étiré en longueur, tel que notamment des ensembles de câbles, comprenant un support à base d'un non-tissé, qui est muni au moins sur un côté d'un revêtement adhésif, le support présentant un poids superficiel de 30 à 120 g/m²,
**caractérisée en ce que** le support est constitué d'au moins une couche d'un non-tissé pré-consolidé, à savoir un tissu non-tissé, un non-tissé soufflé à l'état fondu ou un non-tissé de fibres discontinues consolidé mécaniquement par des jets d'air et/ou d'eau ou par aiguilletage, qui est surpiquée avec une pluralité de fils, la densité des fils étant inférieure à 22 fils pour 25 mm de largeur du support, de préférence comprise entre 9 et 20 fils pour 25 mm.

2. Bande adhésive selon la revendication 1, **caractérisée en ce que** le non-tissé est constitué de fibres de polyester, polypropylène, polyéthylène ou polyamide (fibres discontinues ou filaments).

3. Bande adhésive selon la revendication 1 ou 2, **caractérisée en ce que** les fils sont constitués de polyester, polypropylène, polyéthylène ou polyamide.

4. Bande adhésive selon au moins l'une quelconque des revendications 1 à 3, **caractérisée en ce que** les fils sont parallèles les uns aux autres dans le sens machine.

5. Bande adhésive selon au moins l'une quelconque des revendications précédentes, **caractérisée en ce que** la longueur des piqûres est supérieure à 1,5 mm, de préférence de 1,5 à 5 mm.

6. Bande adhésive selon au moins l'une quelconque des revendications précédentes, **caractérisée en ce que** le non-tissé pré-consolidé présente une force de traction maximale d'au moins 2 N/cm.

7. Bande adhésive selon au moins l'une quelconque des revendications précédentes, **caractérisée en ce que** le support est constitué de plusieurs couches de non-tissés de type identique ou différent, qui sont cousues par les fils parallèles les uns aux autres.

8. Bande adhésive selon au moins l'une quelconque des revendications précédentes, **caractérisée en ce que** le matériau non-tissé est comprimé par des calandres.

9. Bande adhésive selon au moins l'une quelconque des revendications précédentes, **caractérisée en ce que** le revêtement adhésif consiste en une composition adhésive à base de caoutchouc naturel, de caoutchouc synthétique, d'acrylate ou de silicone.

10. Bande adhésive selon au moins l'une quelconque des revendications précédentes, **caractérisée en ce que** le revêtement adhésif consiste en une composition adhésive de contact thermofusible d'acrylate de faible poids moléculaire.

11. Utilisation d'une bande adhésive selon au moins l'une quelconque des revendications précédentes pour l'habillage d'un article étiré en longueur, la bande adhésive entourant l'article étiré en longueur sous la forme d'une hélice.

12. Utilisation d'une bande adhésive selon au moins l'une quelconque des revendications précédentes pour l'habillage d'un article étiré en longueur, l'article étiré en longueur étant habillé par la bande dans la direction axiale.

13. Article étiré en longueur, tel que notamment un ensemble de câbles, habillé avec une bande adhésive selon au moins l'une quelconque des revendications précédentes.
